# EUROPEAN PATENT APPLICATION

(11) **EP 4 707 106 A1**
(43) Date of publication of application: **11.03.2026**
(21) Application number: 25191763.9
(22) Date of filing: 25.07.2025
(51) Int. Cl.: B60W 30/18, B60W 50/10, B60W 50/06, B60W 10/06, B60W 10/08

(54) **VEHICLE CONTROL SYSTEM, VEHICLE CONTROL METHOD, CONTROL DEVICE AND COMPUTER PROGRAM PRODUCT**

(30) Priority: 05.09.2024 JP 2024153035
(71) Applicant: MAZDA MOTOR CORPORATION, Hiroshima 730-8670 (JP)
(72) Inventor: Fujinaka, Hironori, Hiroshima, 730-8670 (JP); Yagi, Atsushi, Hiroshima, 730-8670 (JP); Fukuda, Yoshimitsu, Hiroshima, 730-8670 (JP); Akiya, Yuichiro, Hiroshima, 730-8670 (JP); Li, Jiahao, Hiroshima, 730-8670 (JP)
(74) Representative: Müller-Boré & Partner Patentanwälte PartG mbB

(57) **Abstract**

A vehicle control system includes a control device that controls a drive source. The control device includes first control that sets a first target acceleration that increases in accordance with an increase in an accelerator opening degree and controls the drive source on the basis of the first target acceleration, and second control that sets a second target acceleration that increases at a larger change rate than the first target acceleration applied in the first control such that a jerk of a vehicle is less than a predetermined jerk and controls the drive source on the basis of the second target acceleration. The control device first performs the second control when a change speed of the accelerator opening degree increases by a predetermined value or more in a state in which the vehicle is not accelerating, and performs the first control after the second target acceleration reaches a predetermined acceleration.

## Description

### [Technical Field]

The present invention relates to a vehicle control system and a vehicle control method that set a target acceleration and control the torque of a drive source on the basis of the target acceleration. The present invention also relates to a control device and a computer program product.

### [Background Art]

Conventionally, a technique that sets a target acceleration on the basis of an accelerator operation of a driver or the like and controls the torque of a drive source such as an engine or a motor so that this target acceleration is achieved has been known. For example, Patent Literature 1 describes a technique that sets a target acceleration such that the maximum jerk is generated at an accelerator opening degree that is increased by 5 to 10% from an accelerator opening degree in a steady traveling state. In addition, for example, Patent Literature 2 describes a technique that obtains a target value for the jerk and sets a target acceleration on the basis of this target value.

### [Citation List]

### [Patent Literature]

[Patent Literature 1] Japanese Patent Laid-Open No. 2016-217293
[Patent Literature 2] Japanese Patent Laid-Open No. 2008-120183

### [Summary]

### [Problem to be Solved]

As a result of intensive researches conducted by the inventors of the present application, it has been found that at the start of acceleration of the vehicle (when the driver starts to press down on the accelerator pedal), the driver may not be able to recognize the acceleration due to a small acceleration of the vehicle, and may feel that the acceleration response is poor. In particular, it has been found that the driver cannot recognize acceleration when the acceleration of the vehicle is less than the minimum acceleration that enables humans to recognize the start of acceleration (for example, approximately 0.27 to 0.3 m/s², referred to as the "lowest recognizable acceleration" hereinbelow). When the time when the acceleration of the vehicle is less than such a lowest recognizable acceleration is long, the driver tends to feel that the acceleration response is poor.

Thus, it can be said that, in order to improve the acceleration response at the start of acceleration, it is desirable to set a target acceleration such that the acceleration of the vehicle is promptly increased to shorten the time when the acceleration of the vehicle is less than the lowest recognizable acceleration. In this case, it is considered that the target acceleration may be set such that the jerk of the vehicle is increased. However, if the jerk is increased too much, discomfort or the like may be given to the driver. Note that the techniques described in Patent Literatures 1, 2 described above are insufficient to properly improve the acceleration response at the start of acceleration.

The present invention has been made to solve the problem in the conventional techniques described above, and an object thereof is to improve acceleration response at the start of acceleration of a vehicle.

### [Means for Solving the Problem]

The above-mentioned object is achieved by the present invention as defined in independent claims. Particularly, a vehicle control system includes: a drive source that generates a driving force of a vehicle; an accelerator opening degree sensor that detects an accelerator opening degree that is an opening degree of an accelerator pedal included in the vehicle; and a control device configured to control the drive source on the basis of the accelerator opening degree detected by the accelerator opening degree sensor. The control device is configured to include or perform first control that sets a target acceleration (or a first target acceleration) that increases in accordance with an increase in the accelerator opening degree and controls a torque of the drive source on the basis of the set target acceleration, include or perform second control that sets a target acceleration (or a second targe acceleration) that increases at a larger change rate than the target acceleration applied in the first control particularly in order to increase a jerk of the vehicle within a range less than a predetermined jerk. The second control controls the torque of the drive source on the basis of the set target acceleration. The control device is further configured to first perform the second control when a change speed of the accelerator opening degree increases by a predetermined value or more in a state in which the vehicle is not accelerating, and perform the first control after the target acceleration set in the second control reaches a predetermined acceleration.

According to the present invention, since, at the start of acceleration of the vehicle, the acceleration control (second control) is initially performed on the basis of the target acceleration set to increase the jerk of the vehicle within the range less than the predetermined jerk, it is possible to promptly raise the acceleration to cause the acceleration to reach the predetermined acceleration while restraining the occurrence of an excessive jerk. Accordingly, it is possible to improve the acceleration response while reducing discomfort or the like given to the driver due to an excessive jerk. As a result, it is possible to improve the traveling feeling of the driver at the start of acceleration.

For example, the control device is configured to set the predetermined jerk used for setting the target acceleration applied in the second control on the basis of at least any one or more of an increase speed of the accelerator opening degree, a speed of the vehicle, a gear stage of a transmission included in the vehicle, a change rate of the target acceleration applied in the first control, and a gradient of a traveling road of the vehicle.

By setting the target acceleration applied in the second control on the basis of such a predetermined jerk, it is possible to reduce discomfort given to the driver due to a large jerk and a problem caused by the target acceleration with a large change amount and a large change rate.

For example, the predetermined acceleration is defined on the basis of a minimum acceleration that enables humans to recognize start of acceleration.

By the second control described above causing the acceleration to promptly reach such a predetermined acceleration, that is, the lowest recognizable acceleration, it is possible to cause the driver to recognize the acceleration of the vehicle at an early stage at the start of acceleration and effectively improve the acceleration response.

For example, the predetermined acceleration is an acceleration within a range of 0.27 to 0.3 m/s².

For example, the control device is configured to perform the first control without performing the second control when an increase speed of the accelerator opening degree is equal to or larger than a predetermined value, even when the change speed of the accelerator opening degree increases by the predetermined value or more in the state in which the vehicle is not accelerating.

According to an embodiment configured in this manner, it is possible to prevent a large acceleration from occurring due to the second control, for example, when an accelerator operation is performed by vibrations of the foot that unintentionally occur due to an impact when the vehicle climbs over a step.

For example, the control device is configured to perform the first control without performing the second control when the accelerator opening degree increases from a state in which the vehicle is at a stop, even when the change speed of the accelerator opening degree increases by the predetermined value or more in the state in which the vehicle is not accelerating.

According to an embodiment configured in this manner, it is possible to prevent, for example, so-called chip-in shock or the like caused by backlash elimination of the transmission from occurring due to a large acceleration that occurs due to the second control when the vehicle starts moving from a stopped state.

For example, when the change speed of the accelerator opening degree increases by the predetermine value or more is when the change speed of the accelerator opening degree increases by 1% or more.

According to an embodiment configured in this manner, it is possible to perform the acceleration control on the vehicle after the driver's intension to operate the accelerator pedal or the driver's acceleration intension is confirmed to a certain extent.

In another aspect, the present invention is a vehicle control method executed by a control device in a vehicle. Particularly, the vehicle control method includes a drive source that generates a driving force of the vehicle, an accelerator opening degree sensor that detects an accelerator opening degree that is an opening degree of an accelerator pedal included in the vehicle, and the control device configured to control the drive source on the basis of the accelerator opening degree detected by the accelerator opening degree sensor. The method includes: a step of performing first control that sets a target acceleration (or a first target acceleration) that increases in accordance with an increase in the accelerator opening degree and controls a torque of the drive source on the basis of the set target acceleration; and a step of performing second control that sets a target acceleration (or a second target acceleration) that increases at a larger change rate than the target acceleration applied in the first control in order to increase a jerk of the vehicle within a range less than a predetermined jerk and controls the torque of the drive source on the basis of the set target acceleration. The vehicle control method may further includes a step of first performing the second control when a change speed of the accelerator opening degree increases by a predetermined value or more in a state in which the vehicle is not accelerating, and performing the first control after the target acceleration set in the second control reaches a predetermined acceleration. In the other words, The second control is performed first when a change speed of the accelerator opening degree increases by a predetermined value or more in a state in which the vehicle is not accelerating, and the first control is performed after the target acceleration set in the second control reaches a predetermined acceleration.

### [Advantageous Effects]

According to the vehicle control system and the vehicle control method according to the present invention, it is possible to set a target acceleration so as to properly improve acceleration response at the start of acceleration of a vehicle.

### [Brief Description of Drawings]

FIG. 1 is a schematic configuration diagram of a vehicle to which a vehicle control system according to an embodiment of the present invention is applied.
FIG. 2 is an explanatory diagram regarding basic acceleration control using a first target acceleration according to the embodiment of the present invention.
FIG. 3 is an explanatory diagram regarding acceleration control using a second target acceleration according to the embodiment of the present invention.
FIG. 4 is a flowchart showing acceleration control according to the embodiment of the present invention.
FIG. 5 shows a control map of a convergence speed according to the embodiment of the present invention.

### [Embodiment for Carrying Out the Invention]

Hereinbelow, a vehicle control system and a vehicle control method according to an embodiment of the present invention will be described with reference to the accompanying drawings.

### [Entire Configuration]

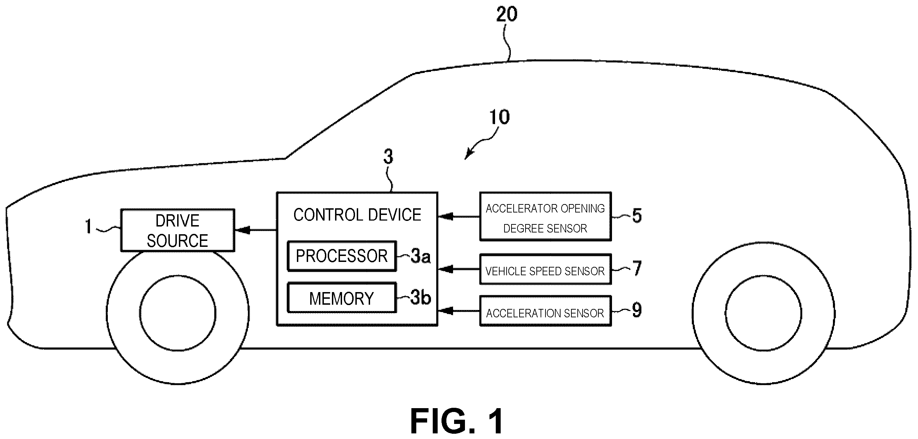

First, the entire configuration of the control system according to the present embodiment will be described with reference to FIG. 1. FIG. 1 is a schematic configuration diagram of a vehicle to which the vehicle control system according to the present embodiment is applied.

As shown in FIG. 1, a vehicle 20 is equipped with a vehicle control system 10 that includes a drive source 1 such as an engine (internal combustion engine) or an electric motor that generates a driving force of the vehicle 20, a control device 3 configured to control the drive source 1, an accelerator opening degree sensor 5 that detects an accelerator opening degree that is the opening degree of an accelerator pedal (not shown) included in the vehicle 20. The vehicle control system 10 may further include a vehicle speed sensor 7 that detects the speed (vehicle speed) of the vehicle 20, and/or an acceleration sensor 9 that detects the acceleration of the vehicle 20. Note that, in addition to these sensors 5, 7, 9, the vehicle 20 may also be provided with various sensors (for example, when the vehicle 20 includes a transmission, a gear stage sensor that detects the gear stage set in the transmission).

The control device 3 is composed of a computer including one or more processors 3a (typically, CPUs), and a memory 3b such as a ROM or a RAM that stores various programs (including a basic control program such as an OS and an application program that is started on the OS to implement a specific function) that are interpreted and executed on the processor 3a, and various data.

In the present embodiment, the control device 3 sets a target acceleration that is to be or should be generated or achieved by the vehicle on the basis of the accelerator opening degree detected by the accelerator opening degree sensor 5. The control device 3 may set the target acceleration also on the basis of the vehicle speed detected by the vehicle speed sensor 7. The control device 3 control the torque of the drive source 1 so that the target acceleration is achieved. The details of the control performed by the control device 3 will be described further below.

### [Control Method]

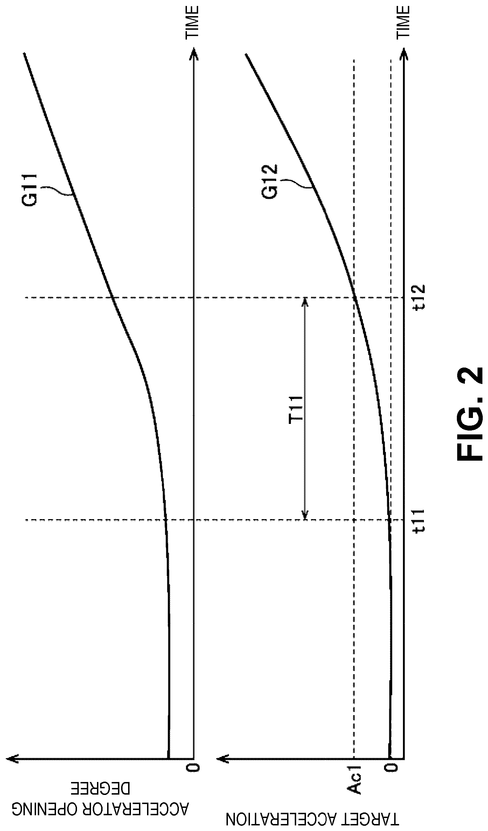

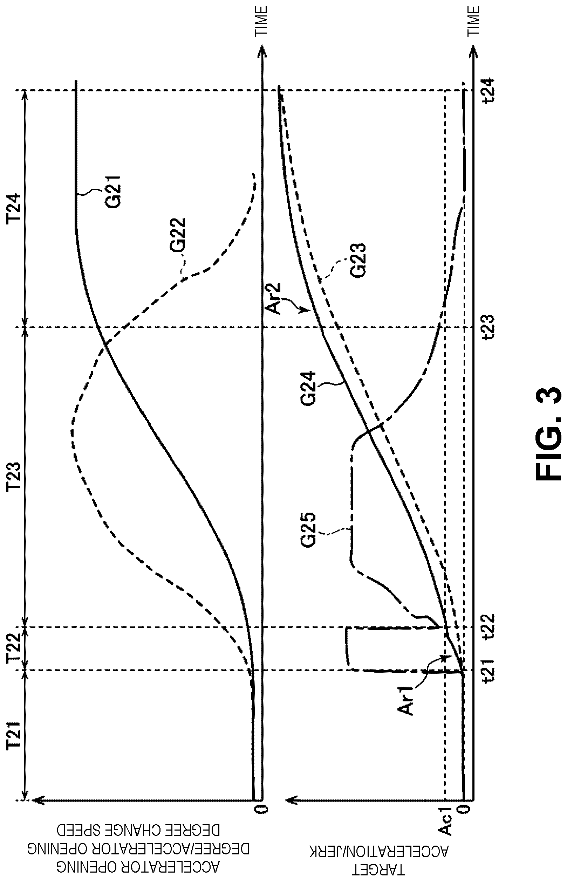

Next, a control method performed by the control device 3 in the present embodiment will be described with reference to FIGS. 2 and 3.

First, basic acceleration control in the present embodiment will be described with reference to FIG. 2. Graph G11 shows temporal changes in the accelerator opening degree, and Graph G12 shows temporal changes in a basic first target acceleration (to be a base) that is set in accordance with this accelerator opening degree.

As shown in FIG. 2, at time t11, during steady traveling of the vehicle 20, the accelerator opening degree is increased by a driver starting to press down on the accelerator pedal (note that "during steady traveling" here means a non-accelerating time in which the vehicle speed is larger than 0 (the same applies thereinafter), and the first target acceleration is basically set to zero). In particular, at time t11, the change speed of the accelerator opening degree increases by 1% or more. For example, from this time t11, the control device 3 sets the first target acceleration that increases in accordance with the increase in the accelerator opening degree, and controls the torque of the drive source 1 so that this first target acceleration is achieved.

In this case, the control device 3 may set the first target acceleration in accordance with the vehicle speed, the gear stage of the transmission included in the vehicle 20, and the like in addition to the accelerator opening degree. For example, the first target acceleration may be set using the method described in Patent Literature 1 described above.

As described above, at the start of acceleration of the vehicle 20 (when the driver starts to press down on the accelerator pedal), when the acceleration of the vehicle 20 is small, the driver cannot or may not recognize the acceleration. For example, when the target acceleration is less than a predetermined acceleration Ac1, the driver cannot recognize the acceleration. This predetermined acceleration Ac1 corresponds to the minimum acceleration (lowest recognizable acceleration) that enables humans to recognize the start of acceleration, and is, for example, an acceleration within the range of 0.27 to 0.3 m/s².

Here, when the vehicle 20 is accelerated on the basis of the first target acceleration as shown in Graph G12 of FIG. 2, since the first target acceleration is less than the predetermined acceleration Ac1 during a period T11 from time t11 to time t12 at the start of acceleration, the driver cannot recognize the acceleration. When such a period T11 is long, the driver may feel that the acceleration response is poor.

Thus, in the present embodiment, in order to improve the acceleration response at the start of acceleration, the acceleration of the vehicle 20 is promptly increased to shorten the time when the acceleration of the vehicle 20 is less than the predetermined acceleration Ac1. For this, in the present embodiment, the control device 3 sets a second target acceleration that increases at a larger change rate (slope) than the first target acceleration at the start of acceleration. In other words, the change rate of the second target acceleration is larger than the change rate of the first target acceleration.

In this case, the control device 3 sets the second target acceleration such that the jerk of the vehicle 20 is increased within a range that does not cause discomfort to the driver, specifically, within a range less than a predetermined jerk of the vehicle 20. In other words, the control device 3 sets the second target acceleration while maintaining the jerk of the vehicle 20 below a predetermined jerk of the vehicle 20.

Next, acceleration control using the second target acceleration according to the present embodiment will be described with reference to FIG. 3. In FIG. 3, Graph G21 shows temporal changes in the accelerator opening degree, Graph G22 shows temporal changes in the change speed of the accelerator opening degree, Graph G23 shows temporal changes in the first target acceleration, Graph G24 shows temporal changes in the second target acceleration, and Graph G25 shows temporal changes in the jerk (corresponding to a target jerk) of the vehicle 20.

As shown in FIG. 3, at time t21, during steady traveling of the vehicle 20 (period T21), the change speed of the accelerator opening degree increases e.g., by 1% or more by the driver starting to press down on the accelerator pedal (Graph G21). From this time t21, in order to increase the jerk of the vehicle 20 while maintaining the jerk within the range less than the predetermined jerk (Graph G25), the control device 3 sets the second target acceleration that increases at the larger change rate (slope) than the first target acceleration (Graph G24, arrow Ar1) and controls the torque of the drive source 1 on the basis of the second target acceleration.

Note that, when setting the second target acceleration in this manner, the control device 3 may also obtain the first target acceleration in parallel with second target acceleration (Graph G23). However, at this point, the control device 3 performs acceleration control based on the second target acceleration (period T22), and does not use the first target acceleration in performing the acceleration control.

For example, the control device 3 sets the predetermined jerk described above on the basis of at least any one or more of the increase speed of the accelerator opening degree, the vehicle speed, the gear stage of the transmission included in the vehicle 20, the change rate (slope) of the first target acceleration, and the gradient of a traveling road of the vehicle 20. Then, the control device 3 sets the second target acceleration so as to increase the jerk of the vehicle 20 within the range less than the predetermined jerk. For example, the control device 3 sets the second target acceleration so as to quickly increase the jerk of the vehicle 20 to the predetermined jerk and maintain the predetermined jerk.

Then, at time t22, the second target acceleration reaches the predetermined acceleration Ac1. The predetermined acceleration Ac1 may be set in advance on the basis of the lowest recognizable acceleration described above, and is, for example, an acceleration within the range of 0.27 to 0.3 m/s².

For example, from such time t22, the control device 3 finishes increasing the second target acceleration at the larger change rate than the first target acceleration, sets the second target acceleration such that the second target acceleration is changed at the same change rate (slope) as the first target acceleration while maintaining the difference from the first target acceleration, and controls the torque of the drive source 1 on the basis of the second target acceleration.

Then, at time t23, the change speed of the accelerator opening degree becomes a state in which the change speed has decreased by a predetermined value or more from an increasing state, that is, the change rate of the accelerator opening degree turns from increasing to decreasing by the predetermined value or more (Graph G22). For example, from this time t23, the control device 3 adjusts the second target acceleration such that the second target acceleration gradually converges to the first target acceleration (arrow Ar2), and controls the torque of the drive source 1 on the basis of the second target acceleration.

Accordingly, causing the second target acceleration to converge to the first target acceleration prevents the second target acceleration being continuously used from causing the occurrence of an acceleration larger for the driver than expected, making a driving operation difficult afterward. In particular, the control device 3 determines a convergence speed for causing the second target acceleration to converge to the first target acceleration on the basis of the first target acceleration and the change speed of the accelerator opening degree (the operating speed of the accelerator pedal), and adjusts the second target acceleration on the basis of the convergence speed.

For example, the control device 3 determines the convergence speed by referring to a control map in which the convergence speed is defined associated with the first target acceleration and the change speed of the accelerator opening degree. This causes the second target acceleration to converge to the first target acceleration without giving an uncomfortable feeling to the driver.

Then, at time t24, in response to the adjusted second target acceleration reaching the first target acceleration, that is, in response to the convergence of the second target acceleration to the first target acceleration being completed, the control device 3 may finish the acceleration control based on the second target acceleration and start acceleration control based on the first target acceleration.

Note that the control performed from time t21 to time t22 (period T22) corresponds to the "second control" in the present invention, and the control performed after time t22 corresponds to the "first control" in the present invention. Although the "first control" is basically acceleration control using the first target acceleration, the first control also includes acceleration control using the second target acceleration that is changed at the same change rate (slope) as the first target acceleration, and, on the other hand, the "second control" is acceleration control using the second target acceleration that is increased at the larger change rate than the first target acceleration.

### [Control Flow]

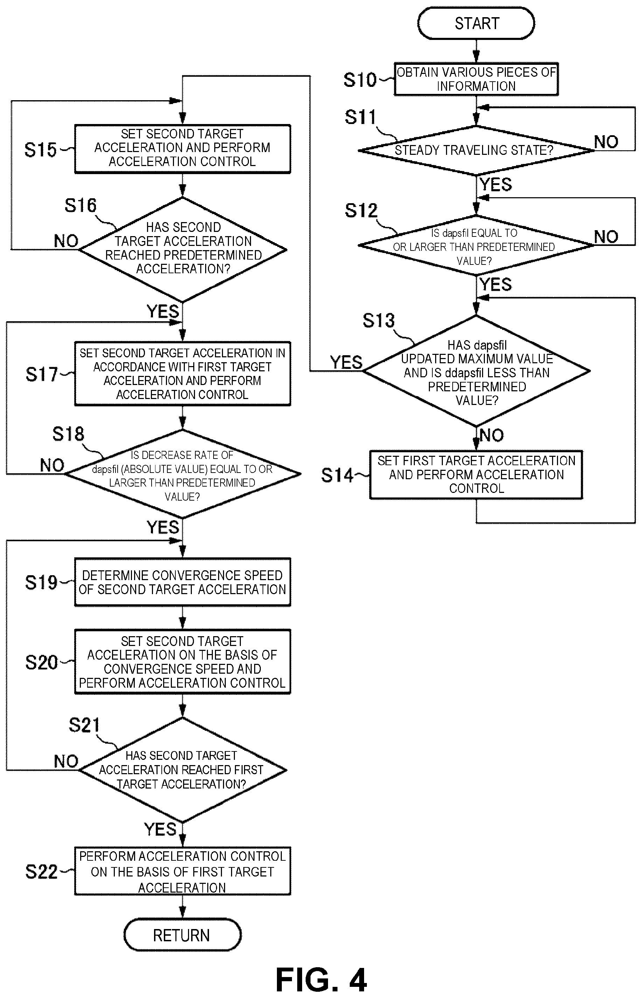

Next, a flowchart showing the acceleration control according to the embodiment of the present invention will be described with reference to FIG. 4. This flow may be repeatedly executed by the control device 3 at a predetermined cycle. For example, the processor 3a in the control device 3 reads a program stored in the memory 3b and executes the program to implement the control related to this flow.

First, in step S10, the control device 3 may obtain one or various pieces of information such as detection values detected by at least the accelerator opening degree sensor 5, the vehicle speed sensor 7, and the acceleration sensor 9. In addition, the control device 3 may obtain, from the detection value of the accelerator opening degree sensor 5, an average value of the detection value for 30 ms (corresponding to the accelerator opening degree and referred to as the "apsfil" hereinbelow), obtain the slope of the apsfil for 100 ms (corresponding to an accelerator opening degree change amount and referred to as the "dapsfil" hereinbelow), and obtain the slope of the dapsfil for 1 s (referred to as the "ddapsfil" hereinbelow).

Next, in step S11, the control device 3 may determine whether the vehicle 20 is in a steady traveling state. For example, the control device 3 determines that the vehicle 20 is in a steady traveling state when the vehicle speed detected by the vehicle speed sensor 7 is larger than zero (this means that the vehicle 20 is not at a stop) and the acceleration detected by the acceleration sensor 9 (the target acceleration may be used instead of the detected acceleration) is zero (step S11: Yes). In this case, the control device 3 proceeds to step S12.

On the other hand, when the control device 3 does not determine that the vehicle 20 is in a steady traveling state (step S11: No), for example, when the vehicle 20 is at a stop or when the vehicle 20 is already accelerating, the control device 3 does not proceed to step S12. In particular, in the present embodiment, when the vehicle 20 accelerates from a stopped state, the control device 3 may not perform acceleration control based on the second target acceleration (in this case, acceleration control based on the first target acceleration is performed). This is because if the acceleration control based on the second target acceleration largely raises the acceleration from the state in which the vehicle 20 is at a stop, so-called chip-in shock or the like caused by backlash elimination of the transmission may occur.

Next, in step S12, the control device 3 determines whether the dapsfil described above is equal to or larger than a predetermined value. Here, the control device 3 may determine whether the change speed of the accelerator opening degree has increased by 1% or more using the dapsfil. By performing this determination, the acceleration control is performed on the vehicle 20 after the driver's intension to operate the accelerator pedal is confirmed to a certain extent.

As a result of step S12, when the control device 3 determines that the dapsfil is equal to or larger than the predetermined value (step S12: Yes), the control device 3 may proceed to step S13. On the other hand, when the control device 3 does not determine that the dapsfil is equal to or larger than the predetermined value (step S12: No), that is, when the dapsfil is less than the predetermined value, the control device 3 may return to step S12 and does not proceed to step S13.

Next, in step S13, the control device 3 may determine whether the dapsfil has updated a maximum value and/or the ddapsfil is less than a predetermined value. Here, first, the driver's acceleration intension (acceleration request) is checked by determining whether the dapsfil (that relatively largely fluctuates) sequentially obtained has updated the maximum value. In addition, by determining whether the ddapsfil is less than the predetermined value, it is checked whether, for example, there is no accelerator operation caused by vibrations of the driver's foot that unintentionally occur due to an impact when the vehicle 20 climbs over a step. In such a situation, since a large acceleration should not be generated in the vehicle 20, the acceleration control based on the second target acceleration is not performed (in this case, the acceleration control based on the first target acceleration is performed).

As a result of step S13, when the control device 3 does not determine that the dapsfil has updated the maximum value and the ddapsfil is less than the predetermined value (step S13: No), the control device 3 may proceed to step S14, set the first target acceleration, and control the torque of the drive source 1 so that this first target acceleration is achieved.

In this case, particularly, the control device 3 sets the first target acceleration in accordance with the accelerator opening degree, the vehicle speed, the gear stage of the transmission, and the like. For example, the control device 3 may set the first target acceleration using the method described in Patent Literature 1 described above.

On the other hand, as a result of step S13, when the control device 3 determines that the dapsfil has updated the maximum value and the ddapsfil is less than the predetermined value (step S13: Yes), the control device 3 may proceed to step S15, set the second target acceleration, and control the torque of the drive source 1 so that this second target acceleration is achieved. For example, the control device 3 sets the predetermined jerk on the basis of the ddapsfil (corresponding to the increase speed of the accelerator opening degree), the vehicle speed, the gear stage of the transmission, the change rate (slope) of the first target acceleration, the gradient of the traveling road of the vehicle 20, and the like, and sets the second target acceleration that increases at the larger change rate than the first target acceleration in order to increase the jerk of the vehicle 20 within the range less than the predetermined jerk (particularly, the second target acceleration is set so as to promptly increase the jerk of the vehicle 20 to the predetermined jerk and maintain this predetermined jerk).

Here, a specific setting method of the second target acceleration by the control device 3 (in particular, a setting method of the predetermined jerk for setting the second target acceleration) will be described as an example. First, when the ddapsfil is large, the control device 3 may set a relatively large predetermined jerk in order to largely raise the second target acceleration. In this case, the control device 3 may use the maximum value of the ddapsfil in order to properly determine the degree of the driver's acceleration intention.

Particularly, when the vehicle speed is low speed (approximately 10 to 30 km/h) and when the vehicle speed is high speed (60 km/h or higher), the control device 3 may set a relatively small predetermined jerk so that the difference between the second target acceleration and the first target acceleration does not increase. On the other hand, when the vehicle speed is medium speed (approximately 30 to 60 km/h), the control device 3 may set a relatively large predetermined jerk in order to largely raise the second target acceleration.

Further particularly, when the gear stage is low gear (e.g., first gear), the control device 3 may set a relatively small predetermined jerk in order to reduce shock. Further particularly, when the change rate (slope) of the first target acceleration is small, a relatively small predetermined jerk is set. This is because if the change rate of the second target acceleration is increased when the change rate of the first target acceleration is small, the change rate of the second target acceleration suddenly decreases when the stage of changing the second target acceleration is started at the change rate (slope) of the first target acceleration (refer to time t22, the period T23 in FIG. 3), and the continuity of the acceleration is lost. Further particularly, when the gradient of the traveling road is large, the control device 3 sets a relatively large predetermined jerk in order to increase the second target acceleration.

Although a plurality of predetermined jerks can be obtained using the various parameters as described above, the control device 3 may ultimately adopt the smallest one of the plurality of predetermined jerks obtained and set the second target acceleration on the basis of this predetermined jerk.

For example, the control device 3 sets the second target acceleration with the smallest change amount. This is to reduce discomfort given to the driver due to a large jerk and a problem caused by the second target acceleration with a large change amount and a large change rate. Basically, the control device 3 determines, in particular, the slope of the second target acceleration on the basis of such a predetermined jerk.

Next, after step S15 described above, the control device 3 proceeds to step S16, and determines whether the second target acceleration has reached the predetermined acceleration Ac1. As a result, when the control device 3 determines that the second target acceleration has reached the predetermined acceleration Ac1 (step S16: Yes), the control device 3 may proceed to step S17, and, on the other hand, when the control device 3 does not determine that the second target acceleration has reached the predetermined acceleration Ac1 (step S16: No), the control device 3 may return to step S15. In the latter case, the control device 3 continues the acceleration control based on the second target acceleration set in step S15 until the second target acceleration reaches the predetermined acceleration Ac1.

Next, in step S17, the control device 3 may finish increasing the second target acceleration at the larger change rate than the first target acceleration, set the second target acceleration such that the second target acceleration is changed at the same change rate (slope) as the first target acceleration while maintaining the difference from the first target acceleration, and control the torque of the drive source 1 on the basis of the second target acceleration. Then, the control device 3 proceeds to step S18.

Next, in step S18, the control device 3 may determine whether the absolute value of a decrease rate (%) of the dapsfil has become equal to or larger than a predetermined value, that is, whether the change speed of the accelerator opening degree has become a state in which the change speed has decreased by a predetermine value or more from an increasing state. As a result, when the control device 3 determines that the absolute value of the decrease rate of the dapsfil has become equal to or larger than the predetermined value (step S18: Yes), the control device 3 may proceed to step S19, and, on the other hand, when the control device 3 does not determine that the absolute value of the decrease rate of the dapsfil has become equal to or larger than the predetermined value (step S18: No), the control device 3 may return to step S17. In the latter case, the control device 3 may continue the acceleration control based on the second target acceleration set in step S17 until the absolute value of the decrease rate of the dapsfil becomes equal to or larger than the predetermined value.

Next, in step S19 and thereafter, the control device 3 may adjust the second target acceleration such that the second target acceleration gradually converges to the first target acceleration, and control the torque of the drive source 1 on the basis of the second target acceleration. First, in step S19, the control device 3 may determine the convergence speed for causing the second target acceleration to converge to the first target acceleration on the basis of the first target acceleration and the change speed of the accelerator opening degree (the operating speed of the accelerator pedal). For example, the control device 3 determines the convergence speed corresponding to the current first target acceleration and the current change speed of the accelerator opening degree by referring to the control map in which the convergence speed is defined associated with the first target acceleration and the change speed of the accelerator opening degree.

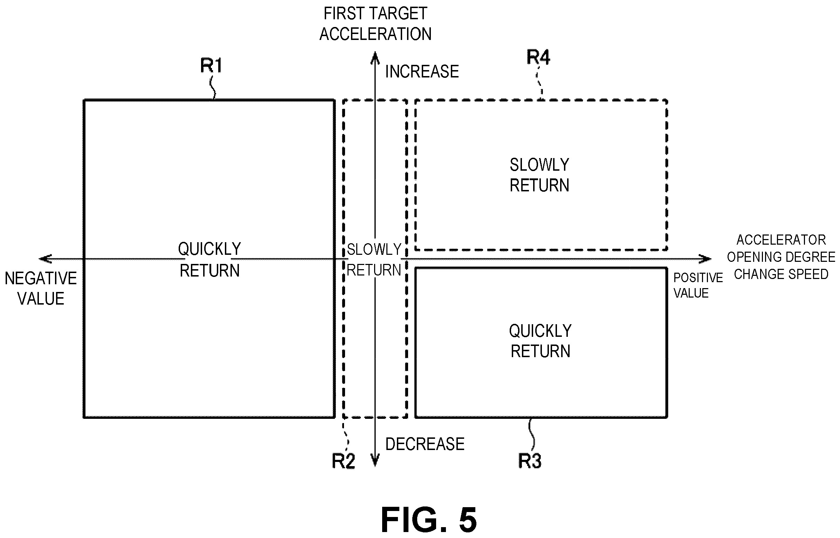

Here, the control map of the convergence speed according to the embodiment of the present invention will be described with reference to FIG. 5. The control map defines the convergence speed associated with the change speed of the accelerator opening degree (horizontal axis) and the first target acceleration (vertical axis).

For example, the control map includes one or a plurality of regions, particularly four regions R1 to R4 that are defined by the change speed of the accelerator opening degree and the first target acceleration, and the value of the convergence speed to be applied (that means the absolute value) is set for each of these regions R1 to R4. In this case, one convergence speed value may be set for each of the four regions R1 to R4.

Note that, in FIG. 5, the change speed of the accelerator opening degree shown on the horizontal axis is defined so as to be a positive value (indicating that the accelerator pedal is being pressed down) on the right side of the center of the horizontal axis (the change speed is zero) and to be a negative value (indicating that the accelerator pedal is being eased off) on the left side of the center of the horizontal axis. In addition, the first target acceleration shown on the vertical axis may be defined so as to increase on the upper side of the center of the vertical axis (the first target acceleration is constant) and to decrease on the lower side of the center of the vertical axis.

The region R1 is the region where the change speed of the accelerator opening degree is a negative value (that is, the region where the accelerator opening degree is decreasing, in other words, the region where the accelerator pedal is being eased off), and in this region R1, a relatively large convergence speed may be set in order to quickly return the second target acceleration to the first target acceleration in accordance with the situation in which the accelerator pedal is being eased off.

In particular, the region R2 is the region where the change speed of the accelerator opening degree is approximately zero (that is, the region where the accelerator opening degree is almost constant, in other words, the region where the position of the accelerator pedal is almost fixed). In this region R2, a relatively small convergence speed may be set in order to slowly return the second target acceleration to the first target acceleration in accordance with the situation in which the accelerator pedal is hardly being operated. Note that the change speed of the accelerator opening degree being approximately zero means the absolute value of the change speed being less than a predetermined value close to zero.

Particularly, the region R3 is the region where the change speed of the accelerator opening degree is a positive value and the first target acceleration is decreasing. In this region R3, a relatively large convergence speed may be set in order to quickly return the second target acceleration to the first target acceleration in accordance with the situation in which the first target acceleration is decreasing.

Further particularly, the region R4 is the region where the change speed of the accelerator opening degree is a positive value and the first target acceleration is increasing, and in this region R4, a relatively small convergence speed is set in order to slowly return the second target acceleration to the first target acceleration in accordance with the situation in which the first target acceleration is increasing.

Next, the large/small relationship between the convergence speeds set in the regions R1 to R4 will be described. First, the convergence speed set in the region R1 may be larger than the convergence speeds set in the other regions R2 to R4. Accordingly, a larger convergence speed is set when the change speed of the accelerator opening degree is a negative value than when the change speed of the accelerator opening degree is equal to or larger than zero.

Particularly, the convergence speed set in the region R3 may be larger than the convergence speed set in the region R4. Since the regions R3, R4 are divided on the basis of whether the first target acceleration degreases or increases (note that both the regions R1, R2 are not defined on the basis of the first target acceleration), it can be said from the relationship between these regions R3, R4 that a larger convergence speed is set when the first target acceleration is decreasing than when the first target acceleration is increasing.

Further particularly, the convergence speed set in the region R3 may be larger than the convergence speed set in the region R2. Accordingly, a larger convergence speed is set when the change speed of the accelerator opening degree is a positive value and the first target acceleration is decreasing than when the change speed of the accelerator opening degree is approximately zero.

Further particularly, the convergence speed set in the region R4 is smaller than the convergence speed set in the region R2. Accordingly, a smaller convergence speed is set when the change speed of the accelerator opening degree is a positive value and the first target acceleration is increasing than when the change speed of the accelerator opening degree is approximately zero.

Note that although, in the example described above, the control map in which one convergence speed value is set for each of the regions R1 to R4 is shown, in another example, a plurality of convergence speed values that change continuously or in stages in accordance with the change speed of the accelerator opening degree and the magnitude of the first target acceleration may be set in each of the regions R1 to R4. In this case, it is preferable to set the convergence speed larger as the change speed of the accelerator opening degree decreases, and set the convergence speed larger as the first target acceleration more largely decreases (in other words, to set the convergence speed smaller as the first target acceleration more largely increases).

Returning to FIG. 4, after step S19 described above, the control device 3 may proceed to step S20, set the second target acceleration on the basis of the convergence speed determined in step S19, and control the torque of the drive source 1 on the basis of the second target acceleration. Then, the control device 3 may proceed to step S21, and determine whether the second target acceleration has reached the first target acceleration, that is, whether the convergence of the second target acceleration to the first target acceleration has been completed.

As a result, when the control device 3 determines that the second target acceleration has reached the first target acceleration (step S21: Yes), the control device 3 may proceed to step S22. In this case, the control device 3 finishes the acceleration control based on the second target acceleration and starts acceleration control based on the first target acceleration (step S22). Then, the control device 3 may finish the process shown in the flow of FIG. 4.

On the other hand, when the control device 3 does not determine that the second target acceleration has reached the first target acceleration (step S21: No), the control device may return to step S19. In this case, the control device 3 determines the convergence speed until the second target acceleration reaches the first target acceleration, and continues the acceleration control based on the second target acceleration that is set on the basis of the convergence speed.

### [Action and Effects]

Next, the action and effects of the vehicle control system and the vehicle control method according to the present embodiment will be described.

In the present embodiment, the control device 3 includes the first control that sets the first target acceleration that increases in accordance with the increase in the accelerator opening degree and controls the torque of the drive source 1 on the basis of the set first target acceleration, and the second control that sets the second target acceleration that increases at a larger change rate than the first target acceleration in order to increase the jerk of the vehicle 20 within the range less than the predetermined jerk and controls the torque of the drive source 1 on the basis of the set second target acceleration, and first performs the second control when the change speed of the accelerator opening degree increases by the predetermined value or more in a state in which the vehicle 20 is not accelerating (steady traveling state), and performs the first control after the second target acceleration set in the second control reaches the predetermined acceleration Ac1.

According to the present embodiment as described above, since, at the start of acceleration of the vehicle 20, the acceleration control (second control) is performed on the basis of the second target acceleration set to increase the jerk of the vehicle 20 within the range less than the predetermined jerk, it is possible to promptly raise the acceleration to cause the acceleration to reach the predetermined acceleration Ac1 while restraining the occurrence of an excessive jerk. Accordingly, it is possible to improve the acceleration response while reducing discomfort or the like given to the driver due to an excessive jerk. As a result, it is possible to improve the traveling feeling of the driver at the start of acceleration.

Particularly, in the present embodiment, the control device 3 sets the predetermined jerk used for setting the second target acceleration on the basis of at least any one or more of the increase speed of the accelerator opening degree, the vehicle speed, the gear stage of the transmission, the change rate of the first target acceleration, and the gradient of the traveling road of the vehicle 20. By setting the second target acceleration on the basis of such a predetermined jerk, it is possible to reduce discomfort given to the driver due to a large jerk and a problem caused by the second target acceleration with a large change amount and a large change rate.

Further particularly, in the present embodiment, the predetermined acceleration Ac1 is defined on the basis of the minimum acceleration (for example, an acceleration within the range of 0.27 to 0.3 m/s²) that enables humans to recognize the start of acceleration. By the acceleration control (second control) based on the second target acceleration described above causing the acceleration to promptly reach such a predetermined acceleration Ac1, that is, the lowest recognizable acceleration, it is possible to cause the driver to recognize the acceleration of the vehicle 20 at an early stage at the start of acceleration and effectively improve the acceleration response.

Further particularly, in the present embodiment, the control device 3 performs the first control without performing the second control when the increase speed of the accelerator opening degree is equal to or larger than the predetermined value, even when the change speed of the accelerator opening degree increases by the predetermined value or more in the state in which the vehicle 20 is not accelerating (steady traveling state). Accordingly, it is possible to prevent a large acceleration from occurring due to the second control, for example, when an accelerator operation is performed by vibrations of the foot that unintentionally occur due to an impact when the vehicle 20 climbs over a step.

Further particularly, in the present embodiment, the control device 3 performs the first control without performing the second control when the accelerator opening degree increases from a state in which the vehicle 20 is at a stop, even when the change speed of the accelerator opening degree increases by the predetermined value or more in the state in which the vehicle 20 is not accelerating. Accordingly, it is possible to prevent, for example, so-called chip-in shock or the like caused by backlash elimination of the transmission from occurring due to a large acceleration that occurs due to the second control when the vehicle 20 starts moving from a stopped state.

Further particularly, in the present embodiment, when the change speed of the accelerator opening degree increases by the predetermine value or more is when the change speed of the accelerator opening degree increases by 1% or more. Accordingly, it is possible to perform the acceleration control on the vehicle 20 after the driver's intension to operate the accelerator pedal or the driver's acceleration intension is confirmed to a certain extent.

### [Modifications]

As described above, the embodiment described above is an example to describe the present invention, and the present invention is not limited to these embodiments. The present invention can be implemented in various modes without departing from the gist thereof.

### [Reference Signs List]

- 1: drive source
- 3: control device
- 5: accelerator opening degree sensor
- 7: vehicle speed sensor
- 9: acceleration sensor
- 10: vehicle control system
- 20: vehicle

## Claims

1. A vehicle control system (10) comprising:
a drive source (1) that is configured to generate a driving force of a vehicle (20);
an accelerator opening degree sensor (5) that is configured to detect an accelerator opening degree that is an opening degree of an accelerator pedal included in the vehicle (20); and
a control device (3) configured to control the drive source (1) on the basis of the accelerator opening degree detected by the accelerator opening degree sensor (5), wherein
the control device (3) is configured to
include first control that sets a first target acceleration (Ar2) that increases in accordance with an increase in the accelerator opening degree and controls a torque of the drive source (1) on the basis of the first target acceleration (Ar2),
include second control that sets a second target acceleration (Ar1) that increases at a larger change rate than the first target acceleration (Ar2) applied in the first control while maintaining a jerk of the vehicle (20) below a predetermined jerk and controls the torque of the drive source (1) on the basis of the second target acceleration (Ar1), and
first perform the second control when a change speed of the accelerator opening degree increases by a predetermined value or more in a state in which the vehicle (20) is not accelerating, and perform the first control after the second target acceleration (Ar1) set in the second control reaches a predetermined acceleration (Ac1).

2. The vehicle control system (10) according to claim 1, wherein the control device (3) is configured to set the predetermined jerk used for setting the second target acceleration (Ar1) applied in the second control on the basis of at least any one or more of an increase speed of the accelerator opening degree, a speed of the vehicle (20), a gear stage of a transmission included in the vehicle (20), a change rate of the target acceleration applied in the first control, and a gradient of a traveling road of the vehicle (20).

3. The vehicle control system (10) according to claim 1 or 2, wherein the predetermined acceleration (Ac1) is defined on the basis of a minimum acceleration that enables humans to recognize start of acceleration.

4. The vehicle control system (10) according to any one of the preceding claims, wherein the predetermined acceleration (Ac1) is an acceleration within a range of 0.27 to 0.3 m/s².

5. The vehicle control system (10) according to any one of the preceding claims, wherein the control device (3) is configured to perform the first control without performing the second control when an increase speed of the accelerator opening degree is equal to or larger than a predetermined value, even when the change speed of the accelerator opening degree increases by the predetermined value or more in the state in which the vehicle (20) is not accelerating.

6. The vehicle control system (10) according to any one of the preceding claims, wherein the control device (3) is configured to perform the first control without performing the second control when the accelerator opening degree increases from a state in which the vehicle (20) is at a stop, even when the change speed of the accelerator opening degree increases by the predetermined value or more in the state in which the vehicle (20) is not accelerating.

7. The vehicle control system (10) according to any one of the preceding claims, wherein the predetermined value of the change speed of the accelerator opening degree is 1% or about 1%.

8. A vehicle (20) comprising:
an accelerator pedal; and
the vehicle control system (10) according to any one of the preceding claims.

9. A vehicle control method executed by a control device (3) in a vehicle including a drive source (1) that generates a driving force of the vehicle (20), an accelerator opening degree sensor (5) that detects an accelerator opening degree that is an opening degree of an accelerator pedal included in the vehicle (20), and the control device (3) configured to control the drive source (1) on the basis of the accelerator opening degree detected by the accelerator opening degree sensor (5), the method comprising:
a step of performing first control that sets a first target acceleration (Ar2) that increases in accordance with an increase in the accelerator opening degree and controls a torque of the drive source (1) on the basis of the first target acceleration (Ar2); and
a step of performing second control that sets a second target acceleration (Ar1) that increases at a larger change rate than the target acceleration applied in the first control while maintaining a jerk of the vehicle (20) below a predetermined jerk and controls the torque of the drive source (1) on the basis of the second target acceleration (Ar1), wherein
the second control is performed first when a change speed of the accelerator opening degree increases by a predetermined value or more in a state in which the vehicle (20) is not accelerating, and the first control is performed after the second target acceleration (Ar1) set in the second control reaches a predetermined acceleration (Ac1).

10. The vehicle control method according to claim 9, wherein the control device (3) sets the predetermined jerk used for setting the second target acceleration (Ar1) applied in the second control on the basis of at least any one or more of an increase speed of the accelerator opening degree, a speed of the vehicle (20), a gear stage of a transmission included in the vehicle (20), a change rate of the target acceleration applied in the first control, and a gradient of a traveling road of the vehicle (20).

11. The vehicle control method according to claim 9 or 10, wherein the predetermined acceleration (Ac1) is defined on the basis of a minimum acceleration that enables humans to recognize start of acceleration, and/or
wherein the predetermined acceleration (Ac1) is an acceleration within a range of 0.27 to 0.3 m/s².

12. The vehicle control method (10) according to any one of claims 9 to 11, wherein the control device (3) performs the first control without performing the second control when an increase speed of the accelerator opening degree is equal to or larger than a predetermined value, even when the change speed of the accelerator opening degree increases by the predetermined value or more in the state in which the vehicle (20) is not accelerating, and/or
wherein the control device (3) performs the first control without performing the second control when the accelerator opening degree increases from a state in which the vehicle (20) is at a stop, even when the change speed of the accelerator opening degree increases by the predetermined value or more in the state in which the vehicle (20) is not accelerating.

13. The vehicle control method (10) according to any one of claims 9 to 12, wherein when the predetermined value of the change speed of the accelerator opening degree is 1% or about 1%.

14. A control device (3) configured to perform the method of any one of claims 9 to 13.

15. A computer program product configured to perform the method of any one of claims 9 to 13 when executed by a control device (3).
